Europäisches Patentamt

European Patent Office

Office européen des brevets

(19)

(11) Publication number : **0 387 652 B1**

(12) **EUROPEAN PATENT SPECIFICATION**

(45) Date of publication of patent specification :
25.01.95 Bulletin 95/04

(51) Int. Cl.⁶ : **F16J 15/12,** F16J 15/16,
F01N 7/18, F16L 23/16

(21) Application number : **90104185.5**

(22) Date of filing : **05.03.90**

(54) **Metal-coated gasket.**

(30) Priority : **13.03.89 JP 28992/89**

(43) Date of publication of application :
**19.09.90 Bulletin 90/38**

(45) Publication of the grant of the patent :
**25.01.95 Bulletin 95/04**

(84) Designated Contracting States :
**DE FR GB IT**

(56) References cited :
**DE-A- 3 543 367**
**US-A- 4 756 561**
**PATENT ABSTRACTS OF JAPAN vol. 9, no.
107 (M-378)(1830) 11 May 1985, & JP-A-59
230737 (IBIDEN K.K.) 25 December 1984 ,
PATENT ABSTRACTS OF JAPAN vol. 5, no.
195 (C-83)(867) 11 December 1981, & JP-A-56
118460 (NIPPON ABESTOS K.K.) 17 SEPTEM-
BER 1981**

(73) Proprietor : **NIPPON PILLAR PACKING CO.
LTD.**
**11-48 Nonakaminami 2-chome**
**Yodogawa-ku**
**Osaka-shi Osaka-fu (JP)**

(72) Inventor : **Nobuchi, Susumu**
**10-23-101, Sumiyoshiyamate 1-chome**
**Higashinada-ku, Kobe-shi, Hyogo-ken (JP)**
Inventor : **Ueda, Takahisa**
**5-10, Mukogaoka 4-chome**
**Sanda-shi, Hyogo-ken (JP)**
Inventor : **Hashimoto, Akira**
**8-3, Mukogaoka 6-chome**
**Sanda-shi, Hyogo-ken (JP)**

(74) Representative : **Fleuchaus, Leo, Dipl.-Ing. et
al**
**Melchiorstrasse 42**
**D-81479 München (DE)**

Jouve, 18, rue Saint-Denis, 75001 PARIS

## Description

Background of the Invention

1. Field of the Invention

The present invention relates to a gasket disposed at the connection part of members used under relatively severe conditions. More specifically, the present invention relates to a metal-coated gasket suitably used as a gasket applied for a connection part in the engine or its exhaust system of a motor vehicle, which is subjected to great variations of temperature and to which a mechanical shock such as vibration or the like is repeatedly applied.

2. Description of the Invention

In the engine of a motor vehicle, there are several connection parts which are subjected to great variations of temperature and to which a mechanical shock such as vibration or the like is repeatedly applied. Examples of such connection parts include the connection part for connecting the cylinder block to the cylinder head, the connection part for connecting the exhaust manifold forming the engine exhaust system, to the cylinder block, the connection part for connecting the exhaust manifold to the catalyst converter, the connection part for connecting the catalyst converter to the muffler, and the like. Gaskets interposed at such connection parts are required to always maintain good sealing properties even though they are used under the severe conditions above-mentioned.

As the gasket used under such severe conditions, there is known a metal-coated gasket in which a soft core member made of heat-resisting fibers such as asbestos fibers, ceramic fibers or the like, or expanded graphite, is coated with a metallic sheet.

In such a metal-coated gasket, the soft core member is excellent in heat resistance and cushioning properties, and the metallic sheet enhances the rigidity. Accordingly, this metal-coated gasket is considered to be very useful to provide excellent sealing properties, as a gasket used in the engine or the exhaust system.

However, when there is used the gasket having the soft core member made of asbestos fibers, ceramic fibers, expanded graphite or the like, the contact pressure of the connection part is decreased to deteriorate the seeing properties of the gasket due to heating by the exhaust gas, vibration of the engine and vibration transmitted from the road surface. Further, in a high-temperature zone, the cushioning properties of the gasket are poor to lower the fitness of the gasket to the connection surface. This also causes the sealing properties of the gasket to be lowered.

The document US-A-4,756,561 discloses a metal-coated gasket comprising a soft core member containing unexpanded vermiculite without chemical treatment, so that the core member shrinks when it is heated for the first time before the temperature reaches about 350°C. This may cause a leakage in a low temperature zone.

JP-A-118 460 discloses a low percentage of inorganic fibrous material as well as an elastic binder. Although a chemical treatment with nitrate ions and ammonium ions takes place the improvement in expanding charateristics and flexibility is minor.

DE-A-3 543 367 discloses a metallic sheet with protrusions and a graphite layer on both sides.

It is an object of the invention to improve the core member particular with respect to expanding characteristics and flexibility to obtain the most suitable material for a metal-coated gasket for high temperatures in which the improvement in sealing properties may be expected regardless of a low- or high-temperature zone. The metal-coated gasket should be capable of preserving the resiliency to maintain good sealing properties, in spite of great compressive force applied to the connection part.

In view oft the foregoing, the present invention provides a metal-coated gasket as defined in claim 1.

According to the metal-coated gasket above-mentioned, the use of the treated unexpanded vermiculite eliminates negative expansion of the vermiculite in a low-temperature zone and improves the expansion coefficient (expansion amount) thereof in a high-temperature zone. Accordingly, regardless of the low- or high-temperature zone, there occurs no gap between the metallic coating sheet and the soft core member, thereby to prevent the contact pressure at the connection part from being lowered. Further, the cushioning properties for effectively relaxing a mechanical shock such as vibration or the like may be assured because the treated unexpanded vermiculite expands with a great expansion coefficient even in the low-temperature zone. Moreover, the fitness of the metal-coated gasket to the bonding surface in both low- and high-temperature zones is improved to restrain the sealing properties from being lowered. Further, the inorganic fibers improve the heat resistance and serve as binders in the high-temperature zone, thereby to improve the shape retention of the soft core member.

EP 0 387 652 B1

Since the metal-coated gasket of the present invention presents the effects above-mentioned, it may be used, with considerably improved sealing properties, at a connection part in the engine or exhaust system of a motor vehicle which is subjected to great variations of temperature and to which a mechanical shock as vibration or the like is repeatedly applied.

Due to the treatment with chemicals, during which untreated unexpanded vermiculite is immersed in an aqueous solution containing sodium ions and/or ammonium ions, the expansion amount and expansion force of such treated unexpanded vermiculite are considerably great, thereby to effectively improve this sealing properties of the metal-coated gasket.

The heat resistance of the above-mentioned metal-coated gasket is particularly remarkable due to the use of ceramic fibers.

The metal-coated gasket in accordance with another embodiment of the present invention comprises a soft core member made of expanded vermiculite coated with a metallic sheet.

The metal-coated gasket in accordance with another embodiment of the present invention comprises a soft core member made of expanded vermiculite coated with a metallic sheet.

In the metal-coated gasket above-mentioned, the density of the expanded vermiculite is high. Accordingly, the high resilient repulsion force of the soft core member provides good sealing properties.

In the metal-coated gasket as above-mentioned in which the soft core member contains vermiculite, reinforcing metallic sheets having raised pawl portions may be advantageously embedded in the soft core member, or reinforcing metallic sheets having pawls adapted to eat into the soft core member may be advantageously laminated on the surface of the soft core member directed to a compression direction.

The reinforcing metallic sheets restrain the vermiculite to which compressive force is applied, from transversely sliding. Further, the reinforcing metallic sheets restrain the metal-coated gasket from being distorted, thereby to improve the shape retention thereof.

Brief Description of the Drawings

Figure 1 is a front view of a metal-coated gasket in accordance with an embodiment of the present invention;

Figure 2 is a section view taken along the line II-II in Figure 1;

Figure 3 is a test graph illustrating the relationship between the temperature and the thermal expansion of vermiculite;

Figure 4 is a section view of another example of the metal-coated gasket;

Figure 5A is a plan view of a further example of the metal-coated gasket;

Figure 5B is a section view taken along the line VB-VB in Figure 5A;

Figure 6 is a section view of still another example of the metal-coated gasket;

Figure 7 is a section view of main portions of the metal-coated gasket in accordance with another embodiment of the present invention;

Figure 8 is a view with portions in section of a portion of the metal-coated gasket in Figure 7, illustrating the step of embedding a reinforcing metallic sheet; and

Figure 9 is a section view of the metal-coated gasket in accordance with a further embodiment of the present invention.

Detailed Description of the Preferred Embodiment

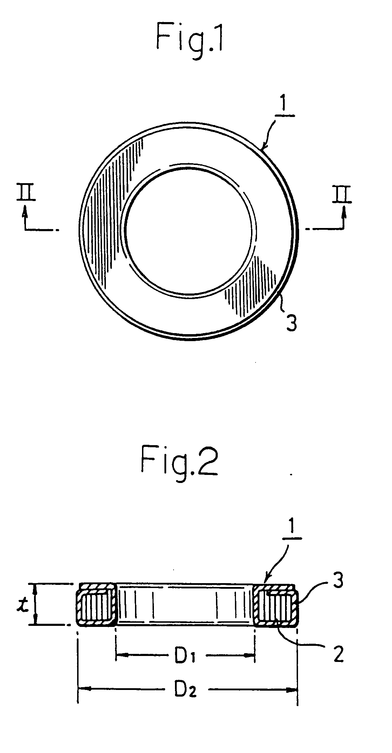

A metal-coated gasket 1 in Figs. 1 and 2, comprises a soft core member 2 coated with a metallic coating sheet 3, and is made in the form of an annulus.

The metallic coating sheet 3 is made of stainless steel sheet (for example, SUS304).

The soft core member 2 is made of a heat-resisting expandable material mainly consisting of 30 to 60 % by weight of unexpanded vermiculite treated with chemicals, and 20 to 40 % by weight of ceramic fibers as the inorganic fibers. Preferably, the heat-resisting expandable material consists of 50 % by weight of unexpanded vermiculite, and 30 % by weight of ceramic fibers. The soft core member 2 further contains 5 to 20 % by weight of an organic binder. As the organic binder, an acrylate polymer or cellulose pulp may be used. Preferably, 20 % by weight of the organic binder is contained.

The unexpanded vermiculite is a treated unexpanded vermiculite obtained by treating an untreated unexpanded vermiculite with an aqueous solution of sodium ammonium hydrogen phosphate. The untreated unexpanded vermiculite contains cations apt to be exchanged with $Na^+$ ions, and cations apt to be exchanged with $NH4^+$ ions. Accordingly, when the untreated unexpanded vermiculite is immersed in the aqueous solution above-mentioned, an ion exchange is carried out with the aqueous solution containing these both ions. By such

3

an ion exchange, the vermiculite is brought to treated unexpanded vermiculite presenting effectively increased expansion amount and expansion force. As the aqueous solution for treating the vermiculite, there may be used an aqueous solution of diammonium hydrogen phosphate or sodium dihydrogen phosphate. The $NH4^+$ ions in the former aqueous solution, or the $Na^+$ ions in the latter aqueous solution are exchanged with the ions in the untreated unexpanded vermiculite.

The ceramic fibers in the soft core member 2 improve the heat resistance thereof. Particularly, in a high-temperature zone where the organic binder perfectly disappears, the ceramic fibers serve as binders to improve the shape retention of the soft core member 2.

As the organic binder, an acrylate polymer, cellulose pulp or the like may be preferably used. It is required to use 5 to 20 % by weight of the organic binder. If less than 5 % by weight of the organic binder is used, the resiliency of the soft core member 2 at an ambient temperature is insufficient.

The following description will discuss an example of measurement of the thermal coefficient of expansion of unexpanded vermiculite.

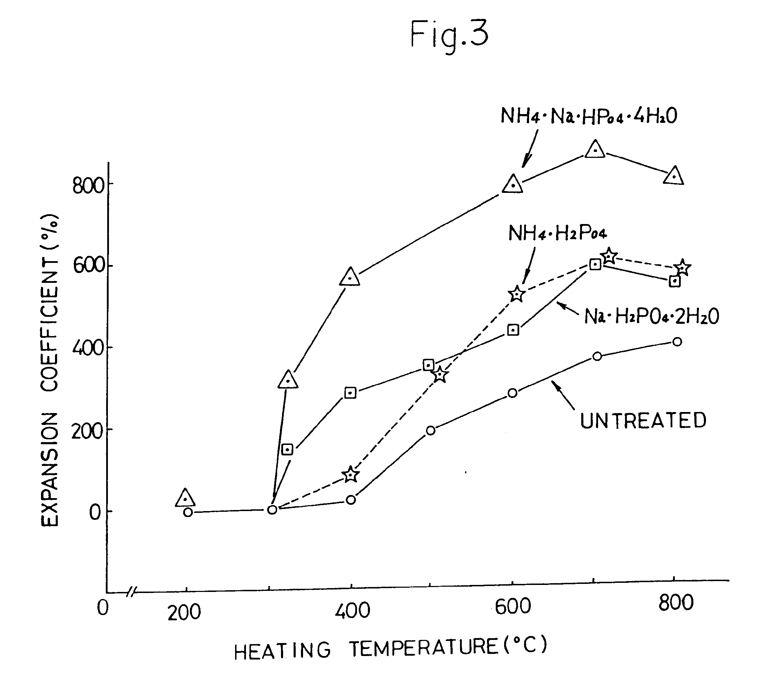

One thousand grs. of untreated unexpanded vermiculite from South Africa was immersed in each of three different aqueous solutions as shown in Table 1 at an ambient temperature for 120 hours. After washed with running water, each vermiculite was dried at 105°C for 2 hours, thus preparing treated unexpanded vermiculite. After each treated unexpanded vermiculite had been heated at a predetermined heating temperature for 30 minutes, its thermal coefficient of expansion was measured. The measurement results are shown in Fig. 3.

## Table 1

### Treating Aqueous Solutions

| Treating Chemical | Sodium ammonium hydrogen phosphate | Ammonium dihydrogen phosphate | Sodium dihydrogen phosphate |
|---|---|---|---|
| Amount(g) | 150 | 150 | 400 |
| Water(g) | 850 | 850 | 800 |

As apparent from Fig. 3, the untreated unexpanded vermiculite presented a negative expansion due to creep in a low-temperature zone around 300°C, while the treated unexpanded vermiculite presented no such negative expansion. The treated unexpanded vermiculite treated with the aqueous solution of sodium ammonium hydrogen phosphate presented, in a high-temperature zone, an expansion coefficient (expansion amount) higher (greater) than that of the treated unexpanded vermiculite treated with the aqueous solution of ammonium dihydrogen phosphate or sodium dihydrogen phosphate.

The following description will discuss an example of procedure for manufacturing the metal-coated gasket 1 as shown in Figs. 1 and 2.

There is manufactured, according to a combing-out method, a heat-resisting expandable sheet containing 50 % by weight of treated unexpanded vermiculite treated with an aqueous solution of sodium ammonium hydrogen phosphate, 30 % by weight of ceramic fibers, and 20 % by weight of an organic binder. The heat-resisting expandable sheet thus formed has a thickness of 3 mm and density of 0.7 $g/cm^3$. This sheet is cut into tape-like pieces. A tape-like cut piece is wound in the form of an eddy, causing the piece to be made in the form of a ring. The ring-like piece is pressed, thereby to prepare a ring-like heat-resisting expandable member, i.e., the soft core member 2, having a height of about 4 mm. The metallic coating sheet 3 having a thickness of 0.15 mm made of a stain-less steel sheet (SUS304) is wound on the surface of the soft core member 2. Thus, the soft core member 2 is coated with the metallic coating sheet 3 as shown in Fig. 2. There is thus formed the metal-coated gasket 1 having an inner diameter $D_1$ of 49 mm, an outer diameter $D_2$ of 58 mm, and a thickness $t$ of 5 mm.

A test was conducted on the metal-coated gasket 1 thus formed as to the sealing properties thereof. That is, with the metal-coated gasket 1 interposed at the connection part for connecting the catalyst converter to the exhaust manifold in the exhaust system of a 4-cycle gasoline engine, the sealing properties of the metal-coated gasket 1 were checked. There was repeated, several times, a test according to a pattern in which the engine was continuously operated and stopped while the operation mode was suitably changed from a low-speed operation to a high-speed operation with vibration applied to the connection part by a vibrating feeder. According to the test results, it was made sure that the metal-coated gasket 1 has excellent sealing properties.

This shows that the treated unexpanded vermiculite and the inorganic fibers restrain the negative expansion in a low-temperature zone from 200 to 300°C and improve the expansion coefficient (expansion amount) in a high-temperature zone not less than 600°C. More specifically, this prevents the occurrence of a gap between the metallic coating sheet 3 and the soft core member 2 regardless of the low- or high-temperature zone. This prevents the contact pressure at the connection part from being lowered. It can be considered that the excellent sealing properties above-mentioned are provided because the treated unexpanded vermiculite expands with a great expansion coefficient even in the low-temperature zone so that a mechanical shock such as vibration or the like is effectively absorbed and relaxed. The excellent sealing properties above-mentioned are also provided because the inorganic fibers serve as binders in the high-temperature zone, assuring the shape retention of the soft core member 2.

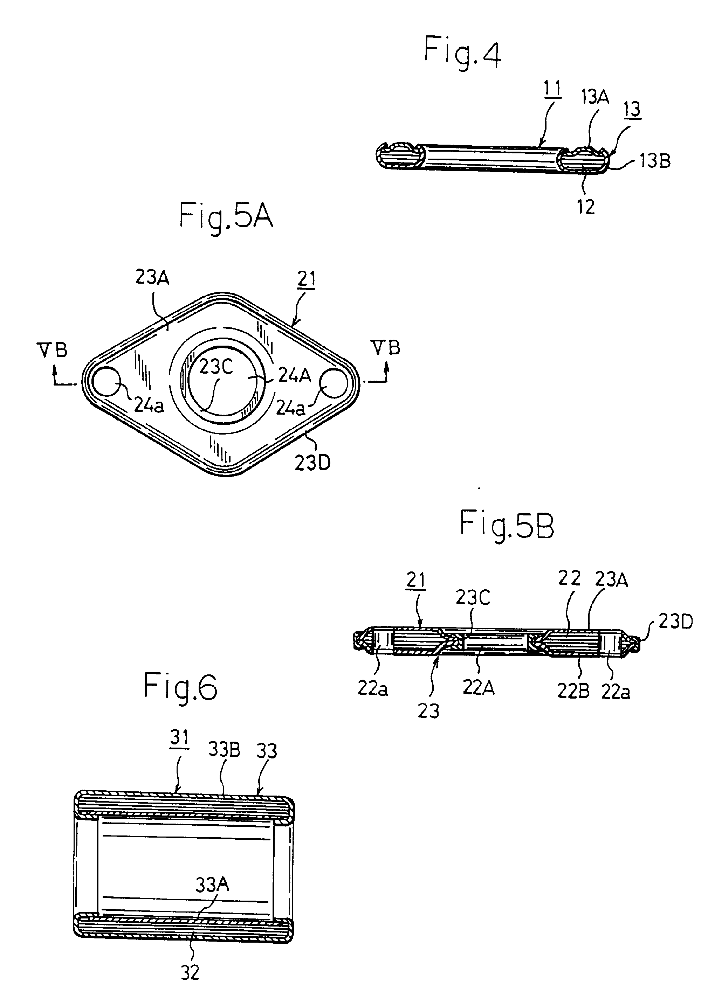

A metal-coated gasket 11 in Fig. 4 has a soft core member 12 formed by laminating a plurality of annular disks punched from the heat-resisting expandable sheet having a thickness of 3 mm and density of 0.7 g/cm³ above-mentioned. The soft core member 12 is coated with a pair of upper and lower metallic coating sheets 13A, 13B. The metallic coating sheet 13B has an U-shape section. The metallic coating sheet 13A closes the opening of the metallic coating sheet 13B with the peripheries of the metallic coating sheet 13A engaged with the insides of the peripheries of the opening of the metallic coating sheet 13B.

A metal-coated gasket 21 shown in Figs. 5A and 5B has a soft core member 22 formed by laminating a plurality of heat-resisting expandable sheets, each sheet having a through-hole 24A and through-holes 24a respectively formed in the center and left- and right-hand sides of the sheet. This soft core member 22 is coated with disk-like metallic coating sheets 23A, 23B which are vertically symmetrically disposed. The inner and outer peripheries of the metallic coating sheets 23A, 23B are securely connected by metallic grommets 23c, 23D, each having a U-shape section, which hold these peripheries from the outside.

A metal-coated gasket 31 shown in Fig. 6 has a soft core member 32 formed by winding, in a plurality of laminations, a heat-resisting expandable sheet on the outer periphery of a cylindrical metallic coating member 33A. The exposed surface of the soft core member 32 is coated with a cylindrical metallic coating member 33B of which ends are turned to overlap the ends of the cylindrical metallic coating member 33A.

Another example of the metal-coated gasket having an appearance similar to that of the metal-coated gasket of the present invention shown in Fig. 1, 2, 3, 4, 5 or 6, has the soft core member 2, 12, 22 or 32 solely made of expanded vermiculite. The expanded vermiculite has high density. Accordingly, the metal-coated gasket using the expanded vermiculite as the soft core member is provided with good sealing properties because of high resilient repulsion force of the soft core member.

According to the metal-coated gasket of the present invention, regardless of the type of the soft core member, there are instances where the soft core member is distorted due to reception of a strong compressive force so that the vermiculite transversely slides. If the vermiculite transversely slides, the restoring force of the vermiculite is lowered, so that the soft core member cannot be provided with such a resilient repulsion force as to provide good sealing properties.

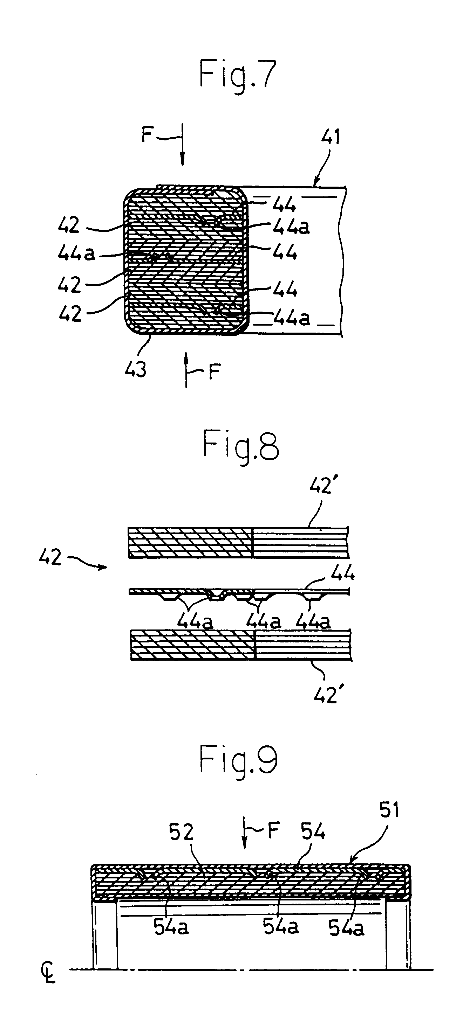

Fig. 7 shows a metal-coated gasket 41 in accordance with another embodiment of the present invention, which overcomes the problem above-mentioned.

Reinforcing metallic sheets 44 are embedded in a soft core member 42 coated with a metallic sheet 43. The reinforcing metallic sheets 44 have raised pawl portions 44a and have faces directed to a compressing direction (shown by an arrow F). In Fig. 7, the soft core member 42 has three layers, in each of which the reinforcing metallic sheet 44 is embedded. As shown in Fig. 8, the soft core member 42 is arranged such that each reinforcing metallic sheet 44 is sandwiched by two heat-resisting expandable sheets (or expanded vermiculite sheets) 42'. The laminated body of the reinforcing metallic sheet 44 and two sheets 42' is pressed, causing the laminated body to be made in the form of a ring. Thus, there is formed the soft core member 42 in which the reinforcing metallic sheets 44 are embedded. The raised pawl portions 44a may be formed by punching the reinforcing metallic sheets 44. In the metal-coated gasket 41 having the arrangement above-mentioned, the raised pawl portions 44a of the reinforcing metallic sheets 44 eat into the soft core member 42, thereby to prevent the vermiculite from transfersely sliding when a compressive force is applied in the direction shown by an arrow F. It is a matter of course that the reinforcing metallic sheets 44 serve as reinforcing members for restraining the metal-coated gasket 41 from being distorted.

Fig. 9 shows, in section, a metal-coated gasket 51 in accordance with a further embodiment of the present invention. In the metal-coated gasket 51, reinforcing metallic sheets 54 are laminated on the surface of a soft core member 52 which receives a compressive force F. The reinforcing metallic sheets 54 also have raised pawl portions 54a. These raised pawl portions 54a are raised in such a direction as to eat into the soft core member 52. The soft core member 52 together with the reinforcing metallic sheets 54 is coated with metallic sheets 53A, 53B. These metallic sheets 53A, 53B have the same arrangement as that of the metallic sheets 33A, 33B in Fig. 6. In the metal-coated gasket 51, the reinforcing metallic sheets 54 prevent the vermiculite from transversely sliding and assure a strong resisting force against the distorsion of the metal-coated gasket 51.

## Claims

1. A metal-coated gasket comprising: a soft core member (2, 12, 22, 32, 42, 52) mainly composed of inorganic fibers and unexpanded vermiculite, and a metallic sheet (3, 13A, 13B, 23A, 23B, 33A, 33B) which coats said soft core member,
**characterized in,**
that the unexpanded vermiculite is obtained by treatment with chemicals in which untreated unexpanded vermiculite is immersed in an aqueous solution containing sodium ions and/or ammonium ions,
that the core member contains 5 % to 20% of an organic binder,
that it contains 20 to 40 % by weight of the ceramic fibers,
and that reinforcing metallic sheets (3, 13A, 13B, 23A, 23B, 33A, 33B) having raised pawl portions are embedded in the soft core member, said reinforcing metallic sheets (3, 13A, 13B, 23A, 23B, 33A, 33B) having surfaces directed to a compressing direction.

2. A metal-coated gasket according to claim 1,
**characterized in,**
that said unexpanded vermiculite is substituted by expanded vermiculite.

3. A metal-coated gasket according to claim 2,
**characterized in,**
that said reinforcing metallic sheets (3, 13A, 13B, 23A, 23B, 33A, 33B) having pawls adapted to eat into the soft core member (2, 12, 22, 32, 42, 52), are laminated on the surface of said soft core member (2, 12, 22, 32, 42, 52) which is directed to a compressing direction.

## Patentansprüche

1. Eine metallbeschichtete Dichtung, die beinhaltet: Ein weiches Kernglied (2, 12, 22, 32, 42, 52), das hauptsächlich aus anorganischen Fasern, nicht aufgeblähtem Vermiculit und einer Metallfolie (3, 13A, 13B 23A, 23B, 33A, 33B) besteht, mit der das weiche Kernglied beschichtet ist,
**dadurch gekennzeichnet,**
daß das nicht aufgeblähte Vermiculit durch chemische Behandlung gewonnen wird, bei der unbehandeltes, nicht aufgeblähtes Vermiculit in eine wäßrige Lösung getaucht wird, die Natriumionen und/oder Ammoniumionen enthält,
daß das Kernglied 5% bis 20% eines organischen Bindemittels enthält,
daß es 20 bis 40 Gew.% Keramikfasern enthält,
und daß verstärkende Metallbleche (3, 13A, 13B, 23A, 23B, 33A, 33B) mit hochstehenden Pratzenteilen versehen sind und in das weiche Kernglied eingebettet sind, wobei die verstärkenden Metallbleche (3, 13A, 13B, 23A, 23B, 33A, 33B) Flächen aufweisen, die in eine Kompressionrichtung ausgerichtet sind.

2. Eine metallbeschichtete Dichtung gemäß Anspruch 1,
**dadurch gekennzeichnet,**
daß das nicht aufgeblähte Vermiculit durch aufgeblähtes Vermiculit ersetzt wird.

3. Eine metallbeschichtete Dichtung gemäß Anspruch 2,
**dadurch gekennzeichnet,**
daß die verstärkenden Metallbleche (3, 13A, 13B, 23A, 23B, 33A, 33B), die mit Pratzenteilen versehen sind, die dazu ausgelegt sind, sich in das weiche Kernglied (2, 12, 22, 32, 42, 52) hineinzufressen, auf die Fläche des weichen Kernglieds (2, 12, 22, 32, 42, 52) laminiert werden, die in eine Kompressionsrichtung ausgerichtet ist.

**Revendications**

1.  Joint d'étanchéité, à revêtement métallique, comprenant une âme souple ou molle (2,12,22,32,42,52) principalement composée de fibres minérales et de vermiculite non expansée, et une feuille métallique (3, 13A, 13B, 23A, 23B, 33A, 33B) qui recouvre ladite âme molle, joint caractérisé en ce que la vermiculite non expansée est obtenue par traitement par des produits chimiques, opération au cours de laquelle on soumet de la vermiculite, non expansée et non traitée, à une immersion dans une solution aqueuse contenant des ions sodium et des ions ammonium,
    en ce que l'âme contient 5 % à 20 % d'un liant organique et contient 20 à 40 % en poids de fibres d'une matière céramique,
    et en ce que des feuilles ou tôles métalliques (3,13A,13B, 23a, 23B, 33A, 33B) d'armature de renforcement, comportant des saillies à rôle de cliquet, sont enfouies dans l'âme molle, lesdites feuilles métalliques (3, 13a, 13B, 23A, 23B, 33A, 33B) d'armature de renforcement ayant des surfaces dirigées vers une direction de compression.

2.  Joint à revêtement métallique selon la revendication 1, caractérisé en ce que la dite vermiculite non expansée est remplacée par de la vermiculite expansée ou dilatée.

3.  Joint à revêtement métallique selon la revendication 2, caractérisé en ce que lesdites feuilles métalliques (3, 13A, 13B, 23A, 23B, 33A, 33B) d'armature de renforcement comportant des zones à rôle de cliquet convenant bien pour mordre et pénétrer dans l'âme souple (2,12,22,32, 42, 52) sont fixées par stratification à la surface de ladite âme molle ou souple (2, 12,22, 32, 42, 52) en direction d'une direction de compression.

# Fig.1

# Fig.2

Fig.3

Fig.4

11  13A  13
13B
12

Fig.5A

23A  21
∇B  ∇B
23C  24A
24a  24a
23D

Fig.5B

21  22  23A
23C
23D
22a  22A  22B  22a
23

Fig.6

31  33B  33
33A
32

## Fig.7

## Fig.8

## Fig.9